**Europäisches Patentamt**

**European Patent Office**

**Office européen des brevets**

(19)

(11) Veröffentlichungsnummer: **0 176 153**
**A2**

# (12) EUROPÄISCHE PATENTANMELDUNG

(21) Anmeldenummer: **85201507.2**

(22) Anmeldetag: **20.09.85**

(51) Int. Cl.⁴: **G 06 K 15/12**

(30) Priorität: **27.09.84 DE 3435426**

(43) Veröffentlichungstag der Anmeldung:
**02.04.86 Patentblatt 86/14**

(84) Benannte Vertragsstaaten:
**DE FR GB IT SE**

(71) Anmelder: **Philips Patentverwaltung GmbH**
**Billstrasse 80**
**D-2000 Hamburg 28(DE)**

(84) Benannte Vertragsstaaten:
**DE**

(71) Anmelder: **N.V. Philips' Gloeilampenfabrieken**
**Groenewoudseweg 1**
**NL-5621 BA Eindhoven(NL)**

(84) Benannte Vertragsstaaten:
**FR GB IT SE**

(72) Erfinder: **Hill, Bernhard, Dr.-Ing.**
**Bäckerstrasse 57**
**D-5100 Aachen-Brand(DE)**

(74) Vertreter: **Koch, Ingo et al,**
**Philips Patentverwaltung GmbH Billstrasse 80 Postfach**
**105149**
**D-2000 Hamburg 28(DE)**

(54) **Magnetooptischer Druckkopf und Verfahren zur Graustufen-Bilderzeugung unter Anwendung eines solchen Druckkopfes.**

(57) Vorrichtung und Verfahren zur Graustufen-Bilderzeugung auf einem Aufzeichnungsträger unter Anwendung eines magnetooptischen Druckkopfes, bei dem Lichtschaltelemente einer magnetooptischen Lichtschaltmaske thermomagnetisch durch gleichzeitige positive oder negative Einwirkung aus auf den Lichtschaltelementen angebrachten Dünnschicht-Wider-standselementen selektiv erzeugten Heizimpulsen und eines pauschal über eine Spule angelegten Magnetfeldes zwischen zwei möglichen Zuständen mit jeweils einer Magnetisierungsrichtung parallel oder antiparallel zur Hauptflächennormalen geschaltet werden, wobei eine individuelle Zeitsteuerung der Lichtschaltelemente in n möglichen Stufen bewirkt wird durch einmaliges Schalten aller Lichtschaltelemente in den (ersten) Ausgangszustand bei positivem Magnetfeld der Spule und nachfolgendes Umschalten in den zweiten Zustand unter Einwirkung eines zweiten statischen Magnetfeldes, das eine zum Magnetfeld der Spule entgegengesetzte Richtung hat und unter Einwirkung von Heizimpulsen zu Zeitpunkten n-1. Das statische Magnetfeld wird bei dem zur Durchführung dieses Verfahrens geeigneten magnetooptischen Druckkopf erzeugt durch eine in der Nähe der Lichtschaltelemente angebrachte Anordnung zur Erzeugung eines statischen Magnetfeldes, insbesondere durch eine Anordnung von Permanentmagneten.

./...

EP 0 176 153 A2

FIG. 1

0176153

Magnetooptischer Druckkopf und Verfahren zur Graustufen-
Bilderzeugung unter Anwendung eines solchen Druckkopfes

Die Erfindung betrifft einen magnetooptischen Druckkopf
zur Erzeugung eines zeilenförmigen Lichtpunktbildes mit
einer linienförmigen Lichtquelle, einer Abbildungsoptik
und einer zwischen Lichtquelle und Abbildungsoptik angeordneten magnetooptischen Lichtschaltmaske mit Lichtschaltelementen, die thermomagnetisch durch von aus auf
den Lichtschaltelementen angebrachten Dünnschicht-Wider-
standselementen selektiv erzeugten Heizimpulsen und eines
pauschal über eine Spule angelegten Magnetfeldes zwischen
zwei möglichen Zuständen mit jeweils einer Magnetisierungsrichtung parallel oder antiparallel zur
Hauptflächennormalen schaltbar sind.

Die Erfindung betrifft weiter ein Verfahren zur Graustufen-Bilderzeugung auf einem Aufzeichnungsträger unter
Anwendung eines solchen magnetooptischen Druckkopfes und
die Verwendung des magnetooptischen Druckkopfes in einem
optischen Drucker.

Eine für diese Zwecke geeignete magnetooptische Lichtschaltmaske ist aus DE-PS 26 06 596 bekannt, mit deren
Hilfe ein elektronisch steuerbares, hoch auflösendes
Lichtpunktmuster erzeugt werden kann.

Aus DE-OS 28 12 206 ist ein magnetooptischer Druckkopf bekannt, der mit Hilfe einer Lichtschaltmaske gemäß DE-PS
26 06 596 aufgebaut ist und der zum zeilenweisen Belichten
optischer Zeilendrucker geeignet ist.

Das Grundprinzip der bekannten Lichtschaltmaske besteht
darin, daß linear polarisiertes Licht beim Durchlaufen einer dünnen ferro-magnetischen und magnetooptischen Granatschicht eine Drehung der Schwingungsebene erfährt (Faraday-Drehung). Diese Drehung ändert ihr Vorzeichen, wenn die Richtung der Magnetisierung in der Schicht umgeschaltet wird. In einer Polarisationsoptik, gebildet aus einer Polarisationsfolie an der Lichteintrittsseite vor der Lichtschaltmaske und einer Analysatorfolie an der Lichtaustrittsseite hinter der Lichtschaltmaske, wird die Drehung der Schwingungsebene für die beiden Zustände der Magnetisierungsrichtung in einen Helligkeitsunterschied (Hell-Dunkel) umgewandelt. Die dünne magneto-optische Granatschicht ist strukturiert in Form von Inseln auf einem Substrat angebracht. Sie besitzt eine spontane Magnetisierung, die sich stets senkrecht zur Schichtfläche ausrichtet und damit entweder parallel oder antiparallel zur Flächennormalen steht. Das Schalten von einem dieser Zustände in den anderen erfolgt thermomagnetisch. Dazu ist in der Ecke jeder Insel ein dünnes Widerstandselement aufgedampft, über das ein Stromimpuls (Heizimpuls) geführt wird. Durch die entstehende Ohm'sche Wärme wird die Umgebung aufgeheizt, wobei mit erhöhter Temperatur die Stabilität der Magnetisierungsrichtung sinkt. Durch ein von außen z.B. mit einer Spule erzeugtes Schaltmagnetfeld kann dann die Magnetisierung in die umgekehrte Richtung umgeschaltet werden. Nach Abkühlung innerhalb von μs ist die neue Magnetisierungsrichtung wieder so stabil, daß ein erneut eingeschaltes Magnetfeld keine Wirkung mehr zeigt. Der Schaltvorgang dauert typischerweise 20μs.

Für die Anwendung in der optischen Drucktechnik werden Schaltelemente integriert auf einem Substratträger in Maskentechnik hergestellt und nebeneinander entlang einer Linie angeordnet, so daß in der genannten Polarisationsoptik ein linienförmiges Lichtpunktbild in Transmission erzeugt werden kann. Das Schaltmagnetfeld wird dabei für alle Schaltelemente einer Zeile gemeinsam über eine Spule zugeführt, während Heizwiderstände für die Schaltelemente individuell über angeschlossene integrierte Schaltkreise gesteuert werden.

In optischen Zeilendruckern werden dann die einzelnen Schaltelemente für die Dauer einer Zeilenbelichtung entweder hell oder dunkel geschaltet, wobei ein Schaltzyklus etwa wie folgt abläuft. Ein hell zu schaltendes Schaltelement wird beispielsweise zu Beginn des Belichtungszyklus der Zeitdauer $T_{max}$ mit einem Heizimpuls $I_h$ und einem positivem Magnetpuls $H^+$ in den Hellzustand und am Ende des Belichtungszyklus mit einem erneuten Heizimpuls $I_h$ und einem negativen Magnetfeldpuls $H^-$ in den Dunkel-Zustand geschaltet. Dieser Vorgang erfolgt parallel für alle Schaltelemente der Lichtschaltzeile, die in den Hell-Zustand zu schalten sind.

In dem bekannten magnetooptischen Druckkopf ist eine Lichtschaltmaske vor einer linienförmigen Lichtquelle angeordnet, die z.B. aus einer Leuchtstofflampe, einer Stabhalogenlampe oder aus einer Kombination einer Punktlichtquelle (z.B. einer Halogenreflektorlampe) und einem Lichtleitfaser-Querschnittswandler bestehen kann, der das Licht der Punktlichtquelle in einen schlitzförmigen Austritt überführt. Das in Transmission entstehende Lichtpunktbild hinter der Lichtschaltmaske wird über eine Optik auf der Bildebene eines Aufzeichnungsträgers abgebildet. In der Praxis sind mehrere Lichtschaltzeilen in einem Druckkopf modulartig aneinander gesetzt und werden über eine Optik aus mehreren parallel angeordneten Objektiven abgebildet.

Ein wesentliches Problem eines solchen Druckkopfes mit parallel erzeugten Lichtpunkten liegt darin, daß in der Bildebene Lichtintensitätsunterschiede zwischen den einzelnen Bildpunkten auftreten, die durch Störungen im Lichtweg, durch Vignettierung der Objektive, durch Schwankungen der Ausleuchtung in der Lichtquelle oder Lichteinkopplung und durch Schwankungen der Geometrie der Lichtschaltelemente in der Lichtschaltmaske zustandekommen.
Diese Gleichmäßigkeitsfehler sind normalerweise stationär,
d.h. sie verändern sich nicht mit der Zeit; sie liegen
typischerweise im Bereich von 20% der Maximalintensität.

Magnetooptische Druckköpfe finden hauptsächlich in elektrophotographischen Geräten Anwendung. In diesen Geräten
wird z.Zt. nur Text oder Graphik, also Schwarz-Weiß-Information gedruckt. Für diese Anwendung können die auftretenden Intensitätsschwankungen noch in Kauf genommen werden,
da die elektrophotographischen Prozesse meistens sehr
"hart" - d.h. mit steiler Belichtungskennlinie - arbeiten.
In Zukunft wird aber auch eine Graustufendarstellung nötig
sein, die z.B. mit Punktdichte-Modulation oder mit weichen
Aufzeichnungsmaterialien und direkter Belichtungsamplituden-Modulation arbeitet. Daneben gewinnen auch andere Anwendungsbereiche in der professionellen Drucktechnik und
der Filmbelichtungstechnik an Bedeutung, wo prinzipiell
ebenfalls mit hoher Gleichförmigkeit der optischen Belichtung gearbeitet werden muß.

Der Erfindung liegt die Aufgabe zugrunde, einen Druckkopf
der eingangs genannten Art so zu verbessern, daß Lichtintensitätsunterschiede zwischen den einzelnen Bildpunkten
ausgeglichen werden und außerdem eine Graustufen-Bilderzeugung bei hoher Geschwindigkeit ermöglicht wird.

Diese Aufgabe wird erfindungsgemäß gelöst durch eine in
der Nähe der Lichtschaltelemente angebrachte Anordnung zur
Erzeugung eines statischen Magnetfeldes in einer Richtung
und eine Spule, deren schaltbares Magnetfeld entgegengesetzte Richtung hat, wobei die Lichtschaltelemente innerhalb eines Zeilenzyklus individuell in n möglichen Stufen einschaltbar sind durch einmaliges Schalten aller Lichtschaltelemente in einen (ersten) Ausgangszustand unter Einwirkung des mit der Spule erzeugten Magnetfeldes und nachfolgendes individuelles Umschalten jedes Lichtschaltelementes in den zweiten Zustand unter Einwirkung von Heizimpulsen zu n-1 Zeitpunkten und des statischen Magnetfeldes.

Nach einer weiteren vorteilhaften Ausgestaltung der Erfindung ist als Anordnung zur Erzeugung eines statischen Magnetfeldes eine Anordnung von Permanentmagneten vorgesehen.

Der Erfindung liegt folgende Erkenntnis zugrunde: Da die magneto-optische Lichtschalt-Technik grundsätzlich keine Lichtamplituden-Modulation durchführen kann (es sind nur zwei Schaltzustände Hell/Dunkel möglich), ist eine Belichtungsamplituden-Steuerung nur über die Zeit möglich. Andererseits ist aber auch die Wirkung von Licht auf optisch empfindliche Materialien stets abhängig von der Lichtintensität und der Belichtungszeit. Eine höhere Lichtintensität kann durch geringere Belichtungszeit ausgeglichen werden. Grundsätzlich ist damit die Möglichkeit gegeben, durch Steuerung der Belichtungszeit jedes einzelnen Bildpunktes in einem Druckkopf eine Korrektur der Lichtintensitätsschwankungen durchzuführen.

Eine Steuerung der Belichtungszeit innerhalb eines Belich- tungszyklus der Dauer $T_{max}$ mit dem bekannten Druckkopf könnte z.B. dadurch erzielt werden, daß zu Beginn des Belichtungszyklus alle Lichtschaltelemente, die in den Zustand "Hell" zu schalten sind, eingeschaltet werden und dann je nach ihrer Lichtintensität zu unterschiedlichen Zeiten wieder abgeschaltet werden (Zeitlängen-Modulation).

0176153

Das Lichtschaltelement mit der geringsten Lichtintensität wird dabei erst zum Ende des Zyklus zur Zeit $t=T_{max}$ wieder abgeschaltet. Praktisch kann diese Steuerung dadurch realisiert werden, daß die Gesamtzeit $T_{max}$ in n äquidistante Zeitabschnitte unterteilt wird und zu Beginn mit positivem Magnetfeld und entsprechenden Heizimpulsen die Lichtschaltelemente eingeschaltet und dann mit umgekehrt gepolten Magnetfeldpulsen zu jedem der angebotenen n-1 verbleibenden Abschnitte mit Heizimpulsen individuell abgeschaltet werden können. Die dabei im Mittel notwendige Anzahl von Heizimpulsen ändert sich nicht mit n, da jedes Lichtschaltelement innerhalb des Intervalls $T_{max}$ nur zweimal geschaltet wird. Die mittlere Heizimpuls-Leistung bleibt damit unverändert. Die Anzahl der Schaltvorgänge der Magnetspule allerdings steigt mit der Zahl n, also mit der "Graustufen-Auflösung" an. Bei n Zeitabschnitten entsprechend n verschiedenen "Graustufen" muß die Spule n-mal geschaltet werden (n=2 für den Grenzfall Hell/Dunkel). Da aber in der Praxis die Schaltrate der magnetooptischen Druckköpfe ohnehin bereits durch die Verlustleistung in der Magnetspule auf einige kHz begrenzt wird, kann eine hohe Graustufen-Auflösung durch diese Zeitlängen-Modulation nur bei stark verminderter Schaltrate (optische Muster pro Zeiteinheit) realisiert werden, d.h., auch eine Korrektur der Intensitätsschwankungen kann nur mit verminderter Schaltrate erkauft werden.

Ein günstigeres Zeitlängen-Modulationsverfahren stellt eine binär abgestufte Einteilung des Zeitintervalls $T_{max}$ dar. Bei der binären Abstufung wird das Zeitintervall $T_{max}$ in m jeweils um den Faktor 2 ansteigende Zeitabschnitte t eingeteilt, also z.B. in $t_1=\Delta t$, $t_2=2\Delta t$, $t_3=4\Delta t$ usw. Bei der Aufteilung in Zeitabschnitte werden dann $n=2^m$ verschiedene Abstufungen (Graustufen) erhalten.

Bei dieser Methode müssen die Lichtschaltelemente im statistischen Mittel innerhalb jedes zweiten Teilabschnitts ein- und ausgeschaltet werden, d.h., die erforderliche Heizleistung steigt mit der Graustufen-Auflösung an. Das Magnetfeld muß zu jedem Zeitabschnitt einmal in positiver und in negativer Richtung eingeschaltet werden, insgesamt sind also bei m Abschnitten 2m Schaltvorgänge erforderlich, bzw. bei n Graustufen 2xld(n) Schaltvorgänge. Für die Magnetspulen-Verlustleistung ist damit das Verfahren ab n=4 günstiger als das vorherbeschriebene Verfahren (2xld(n)>n für n > 4). Die Verlustleistung der Magnetspule erhöht sich durch diese Zeitlängen-Modulation nur um den Faktor $\dfrac{2xld(n)}{2} = ld(n)$ verglichen mit $\dfrac{n}{2}$.

Mit dem optischen Druckkopf gemäß der Erfindung und der Art seiner Ansteuerung können nun praktisch beliebige Graustufen-Auflösungen erreicht werden bei gleichbleibender Heizleistung und nur einer Verdoppelung der Spulenleistung. Hierzu wird ein Permanentmagnetfeld im Bereich der Lichtschaltelemente erzeugt, das parallel zur Flächennormalen in Richtung der Schaltfeldstärke $H^-$ ausgerichtet ist. Dieses Magnetfeld kann z.B. durch Ferromagnete erzeugt werden, die in geeigneter Lage in der Nähe der Lichtschaltelemente angeordnet werden.

Nach einer vorteilhaften Weiterbildung der Erfindung sind Mittel zur optischen Abtastung der Lichtverteilung in der Bildebene des Druckkopfes vorgesehen, die Korrektur-Faktoren liefern, die dem Druckkopf inhärente Lichtintensitätsunterschiede ausgleichen und die so normiert sind, daß beim Schalten aller Lichtschaltelemente in den (ersten) Ausgangszustand eine gleichförmige Lichtverteilung in der Bildebene des Druckkopfes vorliegt, wobei die Korrekturfaktoren in einem elektronischen Speicher abgespeichert sind.

Hiermit ist der Vorteil verbunden, daß die Einschaltzeiten der einzelnen Schaltelemente mit diesen Schaltelementen fest zugeordneten Korrekturfaktoren gesteuert werden können, wobei die Korrekturfaktoren vorteilhafterweise so gewählt werden, daß beim Einschalten in den Hell-Zustand eine gleichförmige Lichtverteilung in der Bildebene entsteht.

Nach einer weiteren vorteilhaften Ausgestaltung der Erfindung ist ein digitaler Multiplizierer in Form eines Festspeichers vorgesehen, in dem alle möglichen Produkte von möglichen Graustufenwerten der Lichtschaltelemente und deren Korrekturfaktoren gespeichert sind und die durch direkte Adressierung mit den digital codierten Graustufenwerten und den Korrekturfaktoren abrufbar und dann einer Zeitlängensteuerung zuführbar sind.

Hiermit ist der Vorteil verbunden, daß alle möglichen Produkte von möglichen Graustufenwerten und Korrekturwerten fest gespeichert werden können und durch direkte Adressierung mit den digital codierten Graustufenwerten und den Korrekturwerten abgerufen werden können, so daß eine Echtzeit-Multiplikation bei hoher Geschwindigkeit ermöglicht wird.

Ein Verfahren zur Graustufen-Bilderzeugung unter Anwendung eines magnetooptischen Druckkopfes nach der Erfindung, bei dem Lichtschaltelemente einer magnetooptischen Lichtschaltmaske thermo-magnetisch durch Einwirkung aus auf die Lichtschaltelemente aufgebrachten Dünnschicht-Widerstandselementen selektiv erzeugten Heizimpulsen und eines pauschal über eine Spule angelegten Magnetfeldes zwischen zwei möglichen Zuständen mit jeweils einer Magnetisierungsrichtung parallel oder antiparallel zur Hauptflächennormalen geschaltet werden, ist dadurch gekennzeichnet, daß eine individuelle Zeitsteuerung der Lichtschaltelemente in n möglichen Stufen bewirkt wird durch einmaliges Schalten aller Lichtschaltelemente in den (ersten) Ausgangszustand bei positivem Magnetfeld der Spule und nachfolgendes Umschalten in den zweiten Zustand unter Einwirkung eines zweiten statischen Magnetfeldes, das eine zum Magnetfeld der Spule entgegengesetzte Richtung hat und unter Einwirkung von Heizimpulsen zu n-1 Zeitpunkten.

Nach einer vorteilhaften Weiterbildung des Verfahrens gemäß der Erfindung wird eine Steuerung der Einschaltzeiten der einzelnen Lichtschaltelemente unter Berücksichtigung von diesen Lichtschaltelementen fest zugeordneten Korrekturfaktoren vorgenommen, wobei die Korrekturfaktoren durch optische Abtastung der unkorrigierten Lichtverteilung in der Bildebene des Druckkopfes gewonnen und in normierter Form in einem elektronischen Speicher gespeichert werden. Mit der Bildung von Korrekturfaktoren ist der Vorteil verbunden, daß dem Druckkopf inhärente Lichtintensitätsunterschiede ausgeglichen werden können.

Nach einer vorteilhaften weiteren Ausgestaltung des Verfahrens nach der Erfindung werden die auf dem Aufzeichnungsträger darzustellenden Grauwert-Signale mit den fest gespeicherten Korrekturfaktoren in einem elektronischen Multiplizierer multipliziert, bevor sie einer Anordnung zur Zeitlängensteuerung zugeführt werden, wobei nach einer weiteren vorteilhaften Ausgestaltung der Erfindung ein Festspeicher eingesetzt wird, in dem alle möglichen Produkte von möglichen Graustufenwerten und Korrekturfaktoren gespeichert sind und durch direkte Adressierung mit den digital codierten Graustufenwerten und den Korrekturfaktoren abgerufen werden.
Hiermit ist der Vorteil verbunden, daß in Echtzeit jeweils das Produkt aus Graustufenwerten der einlaufenden Bildinformation und Korrekturfaktoren am Ausgang eines Festspeichers, z.B. eines EPROM, in einem Schritt gewonnen werden kann.

Mit dem optischen Druckkopf und dem Verfahren gemäß der Erfindung sind die Vorteile verbunden, daß bei gleichbleibender Heizleistung nur eine Verdoppelung der Spulenleistung notwendig ist und daß die Zeitlängen-Steuerung der die Bildpunkte bildenden Schaltelemente zur Erzielung einer Graustufen-Modulation der Bildpunkte für die Aufzeichnung von Grauwerten verwendet werden kann, wobei dem Druckkopf inhärente Lichtintensitätsunterschiede durch fest gespeicherte Korrekturwerte ausgeglichen werden können, die, multipliziert mit den Graustufenwerten, der Zeitlängensteuerung zugeführt werden.

Ein besonderer Vorteil ist, daß der optische Druckkopf gemäß der Erfindung bei hohen Schaltraten ohne wesentlich erhöhte Verlustleistung in den Heizelementen und der Magnetspule arbeitet.

Anhand der Zeichnung wird ein Ausführungsbeispiel der Erfindung beschrieben und in ihrer Wirkungsweise erläutert. Es zeigen:

Fig. 1    Ausschnitt einer Lichtschaltzeile gemäß der
          Erfindung

Fig. 2    Schaltzyklus einer Lichtschaltzeile gemäß der
          Erfindung

Fig. 3    Prinzipieller Aufbau eines optischen Druckkopfes
          gemäß der Erfindung mit digitaler Ansteuerung

Fig. 4    Schaltungsanordnung zur Gewinnung von Korrekturfaktoren

Fig. 5    Ansteuerschaltung für den Druckkopf gemäß der
          Erfindung

Fig. 6  Teil der Ansteuerschaltung gemäß Figur 5.

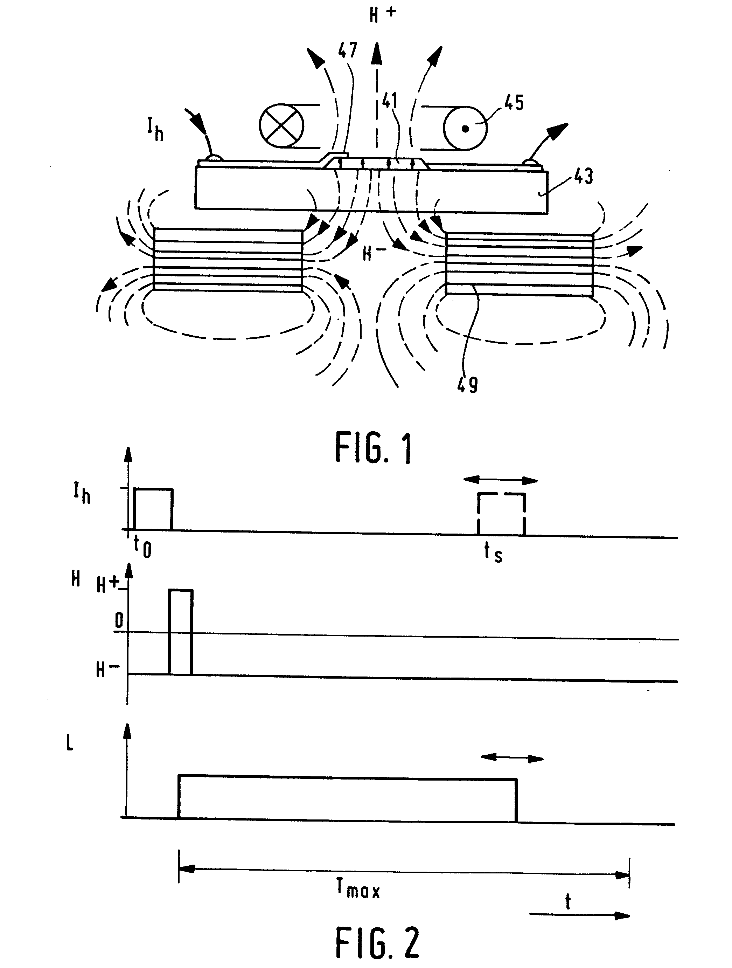

In Figur 1 ist eine Lichtschaltmaske mit einem Lichtschaltelement 41 auf einem Substratträger 43 in integrierter Technik dargestellt. Für die Anwendung in der
optischen Drucktechnik werden viele Schaltelemente integriert auf einem Substratträger in Maskentechnik hergestellt und z.B. entlang einer Linie angeordnet, so daß in
einer Polarisationsoptik ein linienförmiges Lichtpunktbild
in Transmission erzeugt werden kann.
Figur 1 zeigt einen Ausschnitt aus einer derartigen Lichtschaltzeile. Das Lichtschaltelement 41 besitzt eine spontane Magnetisierung, die sich senkrecht zu den Hauptflächen des Lichtschaltelements 41 ausrichtet und damit entweder parallel oder antiparallel zur Flächenormalen
steht. Das Schalten von einem dieser Zustände in den anderen erfolgt thermomagnetisch. Dazu ist auf dem Lichtschaltelement 41 in Dünnschichttechnik ein Widerstandselement als Heizwiderstand 47 aufgebracht, über das ein
Stromimpuls (Heizimpuls) $I_h$ geführt wird. Durch die entstehende Ohm'sche Wärme wird die Umgebung aufgeheizt. Mit
erhöhter Temperatur sinkt die Stabilität der Magnetisierungsrichtung. Durch ein von außen mit einer Spule 45 erzeugtes Schaltmagnetfeld kann dann die Magnetisierung in
die umgekehrte Richtung umgeschaltet werden. Nach Abkühlen
innerhalb von µs ist die neue Richtung wieder so stabil,
daß ein erneut eingeschaltetes Magnetfeld keine Wirkung
mehr zeigt. Das Schaltmagnetfeld wird für alle in einer
Zeile angeordneten Lichtschaltelemente 41 gemeinsam über
die Spule 45 zugeführt, während die Heizwiderstände 47 auf
den Lichtschaltelementen 41 individuell über angeschlossene integrierte Schaltkreise gesteuert werden. Über
eine Anordnung von Permanentmagneten 49 wird im Bereich
der Lichtschaltelemente 41 ein Permanentmagnetfeld erzeugt, das parallel zur Flächenormalen der Lichtschaltelemente 41 in Richtung der Schaltfeldstärke H⁻ ausgerichtet ist. Dieses Magnetfeld kann z.B. durch Ferromagnete erzeugt werden, die in geeigneter Lage in der Nähe der Lichtschaltelemente 41 angeordnet sind. Das Permanentmagnetfeld ermöglicht ein Schalten der Lichtschaltelemente 41 zu beliebigen Zeiten mit Hilfe eines Heizimpulses $I_h$. Der Ablauf für eine Modulation der Belichtungszeit ist in Figur 2 dargestellt. Zu Beginn des Belichtungszyklus der Dauer $T_{max}$ unter Einwirkung einer Lichtquelle L wird mit Hilfe der Magnetspule 45 ein positiver Magnetfeld-Impuls $2H^+$ erzeugt, der doppelt so groß ist, wie das negative Permanentmagnetfeld $H^-$; die Lichtschaltelemente 41 werden so in die Richtung $H^+$ geschaltet. Anschließend kann zu jedem Zeitpunkt nur durch Heizimpulse $I_h$ ohne Spulenfeld zurückgeschaltet werden, also bei beliebiger Graustufen-Auflösung. Da die Magnetspule 45 zu Beginn des Zyklus mit einem im Vergleich zum bekannten Schaltzyklus doppelten Strom betrieben werden muß, ergibt sich die vierfache Verlustleistung, verglichen mit dem bekannten Schaltvorgang. Die mittlere Leistungserhöhung ist 4/2=zweifach.

Dieses Schaltverfahren ist anwendbar, um einen Druckkopf mit Belichtungskorrektur aufzubauen. Dabei werden in einem dem Druckkopf zugeordneten Speicher jedem Lichtschaltelement des Druckkopfes zugeordnete Korrekturwerte für die Belichtungszeit gespeichert. Die einlaufende Dateninformation (bei Schwarz/Weiß-Druckern eine Folge von Nullen und Einsen) wird verknüpft mit den Korrekturwerten, wobei nur für die Hell-Stellung eines Schaltelementes die Korrekturwerte übernommen werden müssen. Aus den Korrekturwerten wird dann in einem Decodier- und Steuernetzwerk (Maskensteuerung) eine Folge von Impulsmustern erzeugt, so daß jedes Lichtschaltelement, das in den Hell-Zustand geschaltet werden soll, zu Beginn eingeschaltet und zu einem, den Korrekturwerten entsprechenden Zeitpunkt wieder ausgeschaltet wird. Die Magnetspule wird nur einmalig zu Beginn eines Zyklus impulsförmig eingeschaltet.

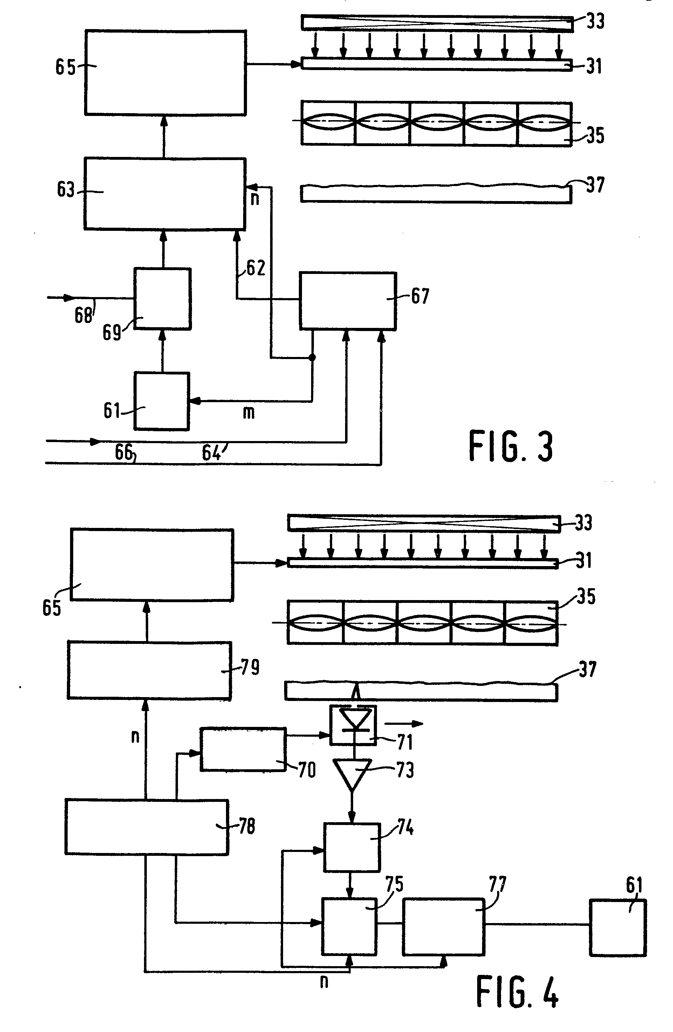

In Fig. 3 ist der prinzipielle Aufbau eines solchen optischen Druckkopfes mit digitaler Ansteuerung dargestellt. Die Korrekturwerte der Lichtschaltelemente sind, aus einem von Synchronsignalen 64 und einem externen Takt 66 gesteuerten Adressenzähler 67 kommend, in Pulscodemodulation (PCM) in einem Eprom-Speicher 61 gespeichert. Sie werden mit der Dateninformation "1" zunächst in einem logischen "UND-Glied" 69 verknüpft und dann in einen Wandler 63, z.B. einen PCM/DPLM (DPLM=digitale Pulslängenmodulation)-Wandler mit Zeilenspeicher, dem der Adressenzähler 67 außerdem einen Takt 62 zuführt, übernommen und dort zunächst jeweils für eine Bildpunktzeile zwischengespeichert. Mit dem Pfeil 68 ist das einlaufende Zeilenmuster gekennzeichnet.

Die Korrekturwerte werden dabei z.B. in PCM-Code wortweise parallel gespeichert, für eine gewünschte Genauigkeit von unter 1% z.B. in 7-bit-Worten (= 128 Stufen). Aus der gespeicherten Zeile werden dann n Heizimpulsmuster nacheinander abgeleitet (n=128 bei 7-bit-Darstellung) und dem Druckkopf mit einer Lichtschaltmaske 31, einer linienförmigen Lichtquelle 33, einer Optik 35 und der Bildebene 37 eines Aufzeichnungsträgers zugeführt, so daß zu den möglichen Zeitpunkten die Lichtschaltelemente ein- bzw. ausgeschaltet werden können. Die gewonnenen Impulsmuster steuern über eine Maskensteuerung 65 die magnetooptischen Lichtschaltmasken 31 des Druckkopfes.

Die Gewinnung von Korrekturfaktoren geschieht mit einer Anordnung nach Figur 4. Der Druckkopf mit der Lichtschaltmaske 31, der linienförmigen Lichtquelle 33, der Optik 35 und dem Aufzeichnungsträger mit Bildebene 37 wird mit jeweils nur einem eingeschalteten Lichtschaltelement betrieben. Die Lichtleistung dieses Lichtschaltelementes wird in der Bildebene 37 mit einem Photodetektor 71 gemessen, anschließend elektronisch über einen Verstärker 73 verstärkt, in einem Analog-Digitalwandler 74 digitalisiert und einem Speicher 75 zugeführt. Danach wird zum nächsten Lichtschaltelement umgeschaltet und so fort, bis alle Lichtschaltelemente vermessen und ihre Lichtleistungen gespeichert sind. Dann werden alle ermittelten Werte in einen Rechner 77 (z.B. einen Personalcomputer) übernommen, und es wird der kleinste Wert ermittelt. Alle Werte werden dann auf den kleinsten Wert normiert. Die davon reziproken Werte werden als Korrekturwerte nach den Bildpunktadressen geordnet in einem EPROM-Speicher 61 gespeichert. Die in Figur 4 dargestellten Schaltungselemente 65 (Maskensteuerung), 78 (Bildpunktzähler und Taktgeber) und 79 (Testmustergenerator) dienen zur Erzeugung der jeweiligen Lichtpunktmuster im Druckkopf und zur Steuerung der Abtastung der Lichtpunktmuster nach dem vorstehend beschriebenen Verfahren. Ein Motor 70 dient zur Verstellung des Photodetektors 71.

Die in Figur 4 als Beispiel dargestellte Anordnung stellt die Eichanordnung dar, mit der jeder Druckkopf vermessen werden muß. Das dabei jeweils erstellte EPROM enthält alle Korrekturwerte dieses Druckkopfes und ist Bestandteil der Druckkopfsteuerung (z.B. wie nach Figur 3).

Mit dem in Figur 3 dargestellten Ausführungsbeispiel können Hell/Dunkel-Muster für Text-Graphik-Darstellung erzeugt werden mit korrigierter Belichtungsenergie der Lichtschaltelemente.

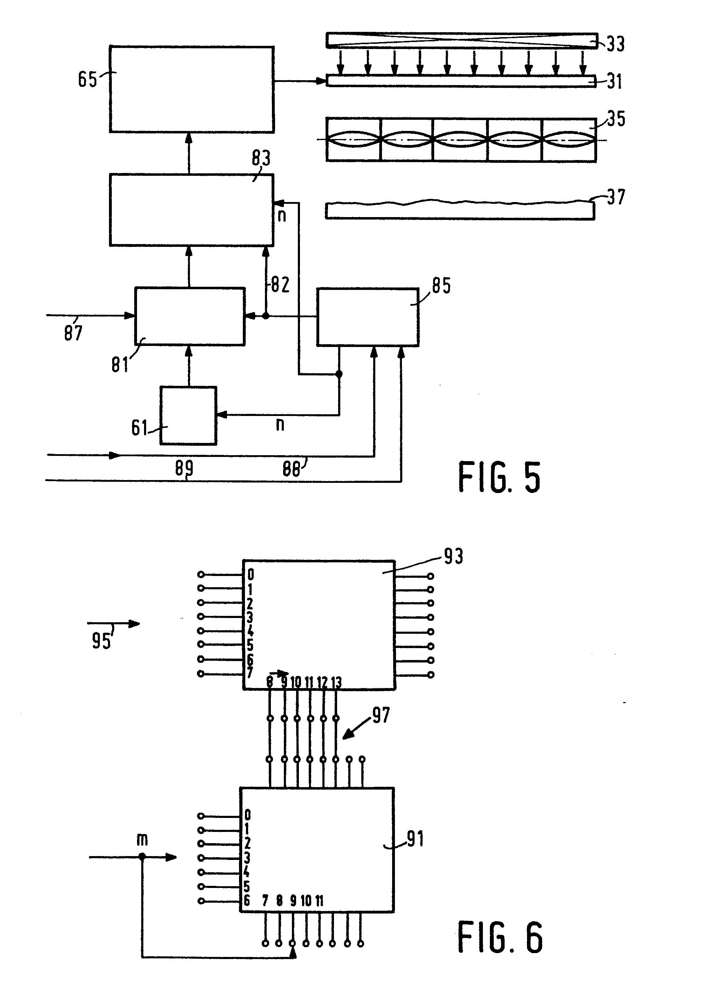

In einfacher Weise läßt sich dieses Ausführungsbeispiel erweitern auf einen Druckkopf für eine Graustufendarstellung, welche mit Amplituden-Modulation der Lichtenergie der Lichtschaltelemente arbeitet. Dazu sind die z.B.
in einem PCM-Code dargestellten Grauwerte (Pfeil 87) für
die zu druckende Bildinformation entsprechend dem Ausführungsbeispiel nach Figur 5 mit den Korrekturwerten aus dem
EPROM-Speicher 61 in einem Multiplizierer 81 zu multiplizieren und dann einem Decodierer 83 (PCM/DPLM-Wandler mit
Zeilenspeicher) zur Umwandlung in n Heizimpulsmuster zuzuführen. Über die Maskensteuerung 65 werden die Produkte
aus Korrektur- und Graustufenwerten dem Druckkopf (31,33,-
35,37) zugeführt.

Die Synchronisierung erfolgt dabei über einen Adressenzähler 85, der, von Zeilensynchronsignalen 88 und einem externen Takt 89 gesteuert, dem Speicher 61 und dem
PCM/DPLM-Wandler 83 die jeweilige Bildpunktadresse m und
dem Multiplizierer 81 sowie dem PCM/DPLM-Wandler 83 einen
Takt 82 zuführt. Eine Modulation der Belichtungsenergie
ist dann in einem Raster von m Werten möglich. Allerdings
wird der Dynamikbereich der Graustufen durch den Korrekturbereich zum Ausgleich der dem Druckkopf inhärenten Intensitätsschwankungen begrenzt. Wird z.B. eine Darstellung
in 256 Graustufen entsprechend 256 Zeitabschnitten innerhalb eines Belichtungszyklus (8-bit-Darstellung) verwendet
und werden 25% dieses Bereiches zum Ausgleich der Intensitätsschwankungen entsprechend 64 möglichen Korrekturwerten
benötigt, dann verbleiben für die effektive Graustufendarstellung noch 192 mögliche Stufen. Mit statistischen Verfahren kann auch eine günstigere Nutzung erzielt werden.

In der Praxis werden hohe Schaltraten der Bildpunktmustererzeugung gefordert. Typisch sind Datenraten der Bildpunkt-Information im Bereich von Mbit/s.

Dies stellt hohe Anforderungen an den Multiplizierer 81 nach Figur 5. Eine einfache Lösung hierzu ist in Figur 6 dargestellt. Dabei werden alle möglichen Kombinationen der Graustufenwerte mit den Korrekturwerten (z.B. bei 192 Graustufen mit 64 Korrekturwerten 12288 Werte insgesamt) in einem Festspeicher 93 gespeichert und direkt durch Adressierung mit den PCM-Graustufenwerten der einlaufenden Bildpunkt-Informationen 95 und den Korrekturwerten 97 adressiert, die in einem Festspeicher 91 (Eprom) gespeichert sind. Diese Korrekturwerte werden mit der Bildpunktadresse m aus dem Speicher 91 abgerufen. Damit kann in Echtzeit jeweils der Produktwert am Ausgang des Speichers 91 in einem Schritt gewonnen werden. Für das genannte Beispiel genügt ein EPROM mit 128 kbit, organisiert in 16 K-Ebenen mit jeweils 8 bit parallel.

PATENTANSPRÜCHE

1. Magnetooptischer Druckkopf zur Erzeugung eines zeilenförmigen Lichtpunktbildes mit einer Lichtquelle, einer Abbildungsoptik und einer zwischen Lichtquelle und Abbildungsoptik angeordneten magnetooptischen Lichtschaltmaske mit Lichtschaltelementen, die thermomagnetisch durch Einwirkung von aus auf den Lichtschaltelementen angebrachten Dünnschicht-Widerstandselementen selektiv erzeugten Heizimpulsen und eines pauschal über eine Spule angelegten Magnetfeldes zwischen zwei möglichen Zuständen mit jeweils einer Magnetisierungsrichtung parallel oder antiparallel zur Hauptflächennormalen schaltbar sind, gekennzeichnet durch eine in der Nähe der Lichtschaltelemente angebrachte Anordnung zur Erzeugung eines statischen Magnetfeldes in einer Richtung und eine Spule, deren schaltbares Magnetfeld eine entgegengesetzte Richtung hat, wobei die Lichtschaltelemente innerhalb eines Zeilenzyklus individuell in $n$ möglichen Stufen einschaltbar sind durch einmaliges Schalten aller Lichtschaltelemente in einen (ersten) Ausgangszustand unter Einwirkung des mit der Spule erzeugten Magnetfeldes und nachfolgendes individuelles Umschalten jedes Lichtschaltelementes in den zweiten Zustand unter Einwirkung von Heizimpulsen zu $n-1$ Zeitpunkten und des statischen Magnetfeldes.

2. Magnetooptischer Druckkopf nach Anspruch 1, dadurch gekennzeichnet,
daß die Anordnung zur Erzeugung eines statischen Magnetfeldes eine Anordnung von Permanentmagneten ist.

3. Magnetooptischer Druckkopf nach einem der vorhergehenden Ansprüche, dadurch gekennzeichnet, daß Mittel zur optischen Abtastung der Lichtverteilung in der Bildebene des Druckkopfes vorgesehen sind, die Korrektur-Faktoren liefern, die dem Druckkopf inhärente Lichtintensitätsunterschiede ausgleichen und die so normiert sind, daß beim Schalten aller Lichtschaltelemente in den (ersten) Ausgangszustand eine gleichförmige Lichtverteilung in der Bildebene des Druckkopfes vorliegt.

4. Magnetooptischer Druckkopf nach Anspruch 3, dadurch gekennzeichnet, daß die Korrekturfaktoren in einem elektronischen Speicher abgespeichert sind.

5. Magnetooptischer Druckkopf nach einem der vorhergehenden Ansprüche gekennzeichnet durch einen digitalen Multiplizierer in Form eines Festspeichers, in dem alle möglichen Produkte von möglichen Graustufenwerten der Lichtschaltelemente und deren Korrekturfaktoren gespeichert sind und die durch direkte Adressierung mit den digital codierten Graustufenwerten und den Korrekturfaktoren abrufbar und dann einer Zeitlängensteuerung zuführ sind.

6. Verfahren zur Graustufen-Bilderzeugung auf einem Aufzeichnungsträger unter Anwendung eines magnetooptischen Druckkopfes nach den Ansprüchen 1 bis 5, bei dem Lichtschaltelemente einer magnetooptischen Lichtschaltmaske thermo-magnetisch durch Einwirkung aus auf den Lichtschaltelementen angebrachten Dünnschicht-Widerstandselementen selektiv erzeugten Heizimpulsen und eines pauschal über eine Spule angelegten Magnetfeldes zwischen zwei möglichen Zuständen mit jeweils einer Magnetisierungsrichtung parallel oder antiparallel zur Hauptflächennormalen geschaltet werden, dadurch gekennzeichnet, daß eine individuelle Zeitsteuerung der Lichtschaltelemente in n möglichen Stufen bewirkt wird durch einmaliges Schalten aller Lichtschaltelemente in den (ersten) Ausgangszustand bei positivem Magnetfeld der Spule und nachfolgendes Umschalten in den zweiten Zustand unter Einwirkung eines zweiten statischen Magnetfeldes, das eine zum Magnetfeld der Spule entgegengesetzte Richtung hat und unter Einwirkung von Heizimpulsen zu n-1 Zeitpunkten.

7. Verfahren nach Anspruch 6, <u>dadurch gekennzeichnet,</u> daß eine Steuerung der Einschaltzeiten der einzelnen Lichtschaltelemente unter Berücksichtigung von diesen Lichtschaltelementen fest zugeordneten Korrekturfaktoren vorgenommen wird, wobei die Korrekturfaktoren durch optische Abtastung der unkorrigierten Lichtverteilung in der Bildebene des Druckkopfes gewonnen und in normierter Form in einem elektronischen Speicher gespeichert werden.

8. Verfahren nach Anspruch 7, <u>dadurch gekennzeichnet,</u> daß die Korrekturfaktoren so normiert werden, daß beim Schalten der Lichtschaltelemente in den (ersten) Ausgangszustand eine gleichförmige Lichtverteilung in der Bildebene des Aufzeichnungsträgers vorliegt.

9. Verfahren nach den Ansprüchen 7 und 8, <u>dadurch gekennzeichnet,</u> daß die auf dem Aufzeichnungsträger darzustellenden Grauwert-Signale mit den fest gespeicherten Korrekturfaktoren in einem elektronischen Multiplizierer multipliziert werden, bevor sie einer Anordnung zur Zeitlängensteuerung zugeführt werden.

0176153

10. Verfahren nach Anspruch 9, dadurch gekennzeichnet, daß als Multiplizierer ein Festspeicher eingesetzt wird, in dem alle möglichen Produkte von möglichen Graustufenwerten und Korrekturfaktoren gespeichert sind und durch direkte Adressierung mit den digital codierten Graustufenwerten und den Korrekturfaktoren abgerufen werden.

FIG. 1

FIG. 2

0176153

FIG. 3

FIG. 4

FIG. 5

FIG. 6